## Europäisches Patentamt
## European Patent Office
## Office européen des brevets

(19)

(11) Numéro de publication: **0 019 552**
**B1**

(12) **FASCICULE DE BREVET EUROPEEN**

(45) Date de publication du fascicule du brevet: **29.06.83**

(51) Int. Cl.³: **B 01 D 37/02, C 02 F 1/54**

(21) Numéro de dépôt: **80400681.5**

(22) Date de dépôt: **14.05.80**

(54) Procédé d'épuration d'eaux résiduaires et/ou industrielles contenant des hydrocarbures.

(30) Priorité: **15.05.79 FR 7912307**

(43) Date de publication de la demande:
**26.11.80 Bulletin 80/24**

(45) Mention de la délivrance du brevet:
**29.06.83 Bulletin 83/26**

(84) Etats contractants désignés:
**BE DE GB IT NL SE**

(56) Documents cités:
**DE - A - 1 926 623**
**DE - A - 2 249 607**
**FR - A - 1 431 152**
**FR - A - 1 443 626**
**FR - A - 2 277 777**
**FR - A - 2 377 830**
**US - A - 3 171 802**
**US - A - 3 408 292**
**US - A - 3 623 978**
**US - A - 3 687 845**
**US - A - 3 802 917**
**US - A - 4 128 477**

(73) Titulaire: **COMPAGNIE FRANCAISE DE RAFFINAGE Société anonyme dite:**
**5, rue Michel-Ange**
**F-75781 Paris Cedex 16 (FR)**

(73) Titulaire: **NALCO FRANCE SARL Société à responsabilité limitée dite:**
**Z.I. de Coignières Maurepas B.P.29**
**F-78310 Maurepas (FR)**

(72) Inventeur: **Marti, Willy**
**Clos"La Meuriade"**
**F-13500 Martigues (FR)**
Inventeur: **Charriere, Michel**
**Clos "La Meuriade"**
**F-13500 Martigues (FR)**
Inventeur: **Gilli, Alain**
**6, rue Renouard Domaine de Calas**
**F-13480 Cabries (FR)**

(74) Mandataire: **Brot, Philippe et al,**
**CABINET BROT 83, rue d'Amsterdam**
**F-75008 Paris (FR)**

Courier Press, Leamington Spa, England.

# Procédé d'épuration d'eaux résiduaires et/ou industrielles contenant des hydrocarbures

La présente invention concerne un procédé d'épuration d'eaux résiduaires et/ou industrielle contenant des hydrocarbures.

L'eau employée dans différentes industries est, lors de son utilisation, fréquemment polluée par diverses impuretés, comme, par exemple, des hydrocarbures. C'est le cas, notamment, dans les raffineries de pétrole ou les usines pétrochimiques. Il est naturellement nécessaire de traiter ces eaux, dites eaux résiduaires, avant leur rejet dans une rivière ou à la mer, afin de ne pas nuire à l'environnement. Les législations en vigueur imposent d'ailleurs que ces eaux rejetées satisfassent à certaines normes, comme:

— la concentration maximale en hydrocarbures,
— la concentration maximale en matières en suspension (ci-après dénommées M.E.S.),
— la concentration maximale on phénols,
— la demande chimique en oxygène (ci-après dénommée DCO) maximale,
— la demande biologique en oxygène (ci-après dénommée DBO) maximale.

Un traitement primaire des eaux résiduaires contenant des impuretés à éliminer consiste à séparer celles-ci par décantation. Ce traitement primaire est toutefois insuffisant pour séparer la totalité des impuretés et une proportion notable d'entre elles demeurent dans l'eau, notamment sous forme d'émulsion ou en solution.

Il est connu, pour compléter la purification d'eaux partiellement épurées par décantation, de les soumettre à une traitement secondaire, consistant à faire floculer les impuretés qu'elles contiennent encore, en ajoutant à ces eaux un floculant, comme un sel métallique hydrolysable, par exemple un sel d'aluminium ou de fer. La boue formée lors de cette floculation doit généralement être incinérée, ce qui implique une installation coûteuse.

Il est également connu, pour améliorer la qualité des eaux sortant des bassins de décantation, de filtrer ces eaux sur un matériau granulaire, par exemple du sable. Les eaux sortant de ces filtres ne satisfont toutefois pas, généralement, aux normes de qualités demandées et la filtration est habituellement suivie d'un traitement biologique, comme un passage sur un lit bactérien. Les filtres doivent faire l'objet de contre-lavages périodiques par de l'eau pour enlever les impuretés, notamment les hydrocarbures et les matières en suspension, retenues par le matériau granulaire. L'eau utilisée pour le contre-lavage ne doit donc pas contenir de telles impuretés ou en contenir très peu. Il peut s'agir d'eau sortant d'un autre filtre, ou d'eau épurée stockée, pouvant d'ailleurs provenir de l'extérieur de l'unité.

Le procédé de filtration sur matériau granulaire présente toutefois des inconvénients.

Le contre-lavage des filtres est souvent imparfait, et des hydrocarbures restent fixés sur le filtre, malgré le contre-lavage, ce que diminue son efficacité. Par suite de cette diminution d'efficacité, des hydrocarbures peuvent être contenus en quantité notable dans l'effluent des filtres. Ces hydrocarbures peuvent alors:

a) s'il n'existe pas de traitement ultérieur, être rejetés avec les eaux sortant de l'unité, ce qui est naturellement préjudiciable à l'environnement;
b) s'il existe un traitement ultérieur, comme un passage sur un lit bactérien, perturber ce traitement et diminuer la qualité de l'eau obtenue.

La demande de brevet français no 2 377 830 propose, pour pallier cet inconvénient, d'ajouter à l'eau de contre-lavage de filtres à matériau granulaire un polyélectrolyte et de traiter cette eau par flottation, avant de la recycler en tête de traitement, les hydrocarbures étant éliminés sous forme de boue floculée.

Les Demanderesses ont trouvé un nouveau moyen pour augmenter l'efficacité des filtres à matériau granulaire utilisés dans le traitement des eaux résiduaires et/ou industrielles contenant des hydrocarbures et éventuellement des matières en suspension.

Le but de la présente invention est donc de perfectionner les procédés de traitement d'eaux résiduaires et/ou industrielles contenant des hydrocarbures utilisant une filtration sur un matériau granulaire.

Les Demanderesses ont constaté que, d'une façon inattendue, l'utilisation de polyélectrolytes anioniques augmentait considérablement l'efficacité des filtres composés de matériau granulaire, dans le traitement d'eaux résiduaires et/ou industrielles contenant des hydrocarbures, et permettait de récupérer, lors des phases de contre-lavage des filtres, des quantités d'hydrocarbures très supérieures à celles récupérées en l'absence de l'utilisation de polyélectrolytes anioniques.

L'usage de polyélectrolytes anioniques pour le traitement par filtration des eaux contenant des matières en suspension est décrit dans le brevet français no 1 443 626. Cependant, les eaux traitées sont des eaux de ruissellement et ne sont pas des eaux industrielles; elles ne contiennent pas d'hydrocarbures ou n'en contiennent que très peu.

De même, si US—A—4 128 477 décrit le traitement d'eaux résiduaires contenant des huiles par un procédé comprenant une phase de filtration sur sable, après addition d'un agent de coagulation qui peut être un polyélectrolyte anionique, cationique ou non ionique, il est bein spécifié dans ce brevet que les hydrocarbures présentes doivent être préalablement éliminés des eaux à traiter.

Si la théorie du processus d'action des polyélectrolytes anioniques sur les eaux contenant de l'huile ou des particules solides est connue (Chemical Engineering Progress, 73, 57, 1977), il est néanmoins recommandé de traiter les eaux huileuses de raffineries avec un polyélectrolyte cationique puis un polyélectrolyte anionique. Or les Demanderesses ont trouvé que l'utilisation de polyélectrolytes anioniques seuls donne de meilleurs résultats pour le traitement de ce type d'effluents.

L'invention a donc pour objet un procédé d'épuration d'eaux résiduaires et/ou industrielles contenant des hydrocarbures, comprenant la filtration desdites eaux dans au moins un filtre composé d'un matériau granulaire, ledit procédé comprenant alternativement une phase de filtration et une phase de contre-lavage de chacun des filtres par de l'eau, cette deuxième phase étant destinée à éliminer du filtre les impuretés retenues par celui-ci lors de la phase de filtration, ledit procédé étant caractérisé en ce que, lors de la phase de filtration, la charge d'eau à épurer est, préalablement à son passage sur le filtre, additionnée d'un polyélectrolyte anionique.

Ledit polyélectrolyte anionique peut être notamment un produit du type sulfonique ou un dérivé de l'acrylamide, lequel peut être sous forme solide, en solution ou sous forme de latex, et obtenu en particulier par copolymérisation ou par hydrolyse d'un polymère non ionique.

Les Demanderesses ont utilisé avec succès un copolymère latex de l'acide acrylique et de l'acrylamide, d'un poids moléculaire d'environ 10.000.000, et ayant un degré d'anionicité voisin de 30%.

Dans le procédé selon l'invention, le polyélectrolyte peut être additionné à la charge d'eaux de préférence en solution aqueuse.

Le polyélectrolyte peut être ajouté à une concentration comprise entre 0,05 et 5 p.p.m., concentration exprimée en poids de produit sec par rapport au poids de la charge d'eau.

La granulométrie du matériau granulaire utilisé dans le procédé selon l'invention peut être comprise entre, par exemple, 0,5 et 5 mm. Du sable d'une telle granulométrie a été utilisé avec succès par les Demanderesses.

Les Demanderesses ont établi que l'addition d'un polyélectrolyte anionique à la charge d'eau à traiter permettait d'obtenir à la sortie du filtre, lors de la phase de filtration, un effluent contenant beaucoup moins d'hydrocarbures et de matières en suspension.

Les Demanderesses ont constaté que, lors de la phase de contre-lavage des filtres à sable, l'eau issue du contre-lavage contenait à la sortie du filtre des agglomérats en suspension dans de l'eau. Ces agglomérats en suspension dans l'eau ont une densité voisine de 1 et contiennent des hydrocarbures et les matières en suspension.

Les Demanderesses supposant donc que, en raison de leur densité, ces agglomérats contiennent une très forte proportion d'eau. La séparation de l'eau est cependant assez difficile, du fait de leur densité.

Toutefois, les Demanderesses ont constaté qu'il était possible de briser ces agglomérats et de bien séparer l'eau et les impuretés qu'ils contiennent, en reprenant les eaux issues du contre-lavage par une pompe centrifuge. On obtient ainsi une bonne séparation de l'eau et des impuretés. Il est entendu que tout autre moyen apte à provoquer un choc mécanique analogue à celui obtenu par le passage dans une pompe centrifuge entre dans le cadre du procédé selon l'invention.

L'invention est illustrée par les deux figures des dessins annexés à la présente description.

La figure 1 représente une installation de traitement d'eaux résiduaires d'un type connu comportant trois filtres à sable, dont deux sont en phase de filtration et un en phase de contre-lavage, et un lit bactérien;

La figure 2 représente, de façon non limitative, une installation du même type que la précédente, utilisant le procédé selon l'invention.

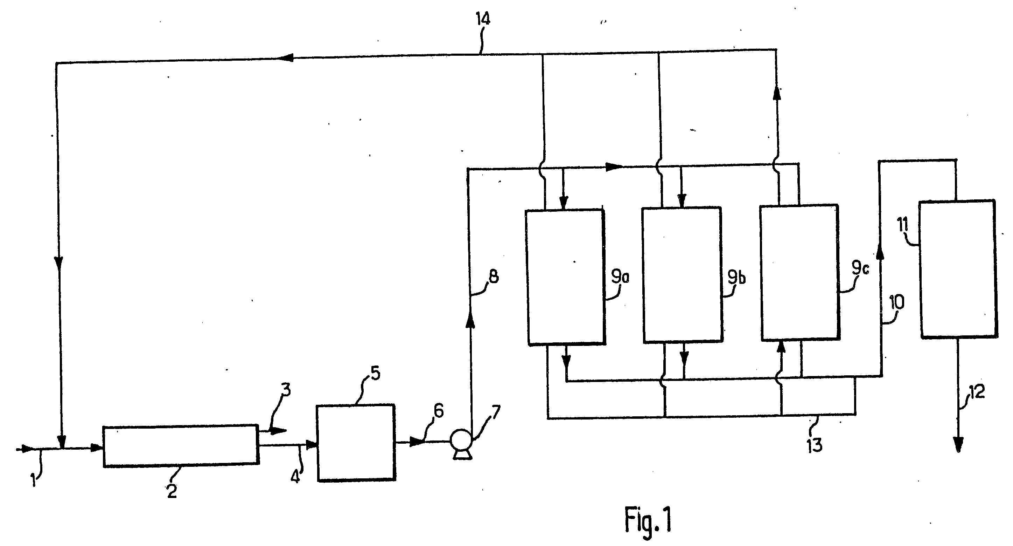

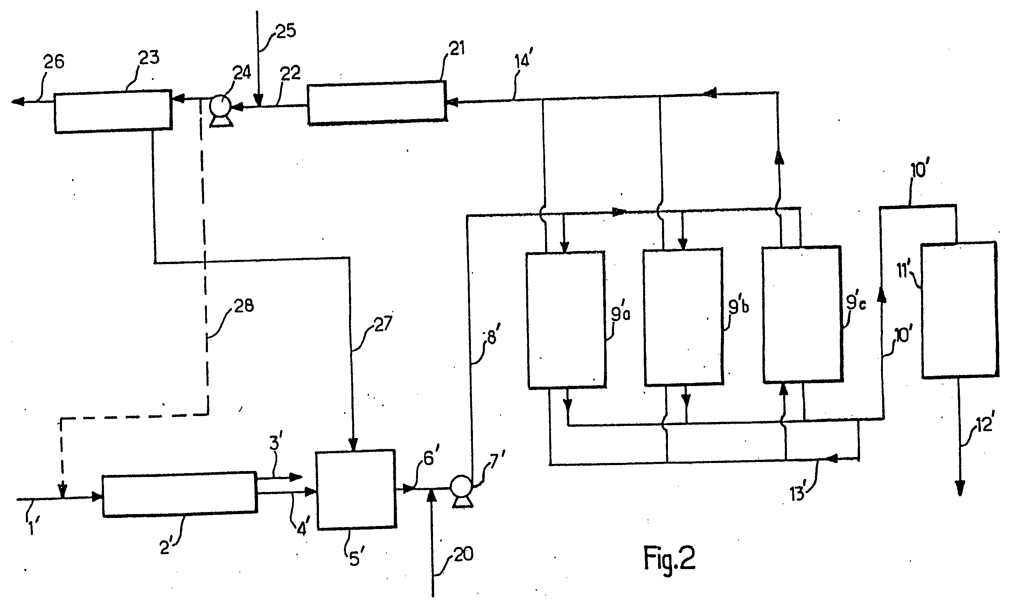

Sur les figures 1 et 2, les vannes permettant de placer les filtres en phase de filtration et en phase de contre-lavage, successivement, n'ont pas été représentées, dans un but de simplification.

On se référera d'abord à la figure 1. Les eaux résiduaires à traiter, par exemple celles collectées dans une raffinerie de pétrole, sont conduites par la ligne 1 dans un bassin de décantation 2, la décantation constituant un traitement primaire. Dans ce bassin, la plus grande partie des impuretés, et notamment les hydrocarbures, sont séparées par gravité, et évacuées par la ligne 3. Les hydrocarbures peuvent notamment être récupérés et redistillés.

L'eau imparfaitement purifiée est conduite par la ligne 4 dans un bassin tampon 5, puis dans une unité de traitement secondaire. Elle est reprise pour cela par la ligne 6 et la pompe 7 pour être conduite par la ligne 8 dans des filtres à sable 9a, 9b et 9c. Sur la figure, trois filtres ont été représentés, mais il peut y en avoir plus ou même seulement deux. Un ou plusieurs filtres peuvent être en phase de contre-lavage, pendant que les autres sont en phase de filtration.

Il serait d'ailleurse possible de n'utiliser qu'un seul filtre, l'eau de lavage provenant alors de l'extérieur de l'unité ou d'un bassin tampon suffisamment important.

Deux des filtres, 9a et 9b, sont représentés en phase de filtration. L'eau filtrée est recueillie par la ligne 10 et passe sur un lit bactérien 11, tandis que l'eau épurée sortant par la ligne 12 est rejetée dans le milieu naturel.

Lorsque l'un des filtres est en phase de contre-lavage (cas du filtre 9c sur le dessin), une partie de l'eau recueillie par la ligne 10 est conduite par la ligne 13 vers ce filtre, pour le contre-laver et enlever les impuretés retenues par celui-ci. L'eau de contre-lavage est reconduite par la ligne 14 à la ligne 1 pour être retraitée.

Les Demanderesses ont constaté que, dans l'installation décrite ci-dessus, les filtres 9a, 9b et 9c perdaient de leur efficacité, en raison vraisemblablement d'une saturation du filtre en hydrocarbures, saturation que les contre-lavages avec de l'eau au moins partiellement purifiée n'étaient pas aptes à contre-balancer.

Une installation mettant en oeuvre le procédé selon l'invention et qui permet de pallier ces inconvénients est représentée sur la figure 2. Sur cette figure, les éléments identiques à ceux représentés sur la figure 1 ont été repérés par les mêmes nombres, affectés de l'indice '.

Dans la canalisation 6', par laquelle sort l'eau venant du bac tampon 5', est injecté par la ligne 20 un polyélectrolyte anionique. La suite du traitement est identique à celle décrite précédemment jusqu'à la sortie de l'eau de contre-lavage du filtre 9'c par la ligne 14'.

L'eau issue du contre-lavage est conduite dans un bassin 21. L'eau sortant de ce bassin par la ligne 22 est ensuite conduite dans un bassin de séparation 23, ou 2'.

Les Demanderesses ont observé que la quantité d'huile récupérée par décantation dans ces bassins est supérieure à celle que l'on récupèrerait en l'absence d'injection de polyélectrolyte anionique.

Les Demanderesses ont constaté que, en faisant passer l'eau de la ligne 22 dans une pompe centrifuge 24, la décantation dans le bassin 23 était facilitée.

De plus, les Demanderesses ont observé que la séparation peut se faire de deux façons:

1) Si l'on additionne des hydrocarbures par la ligne 25 à l'eau entrant dans la pompe 24, les impuretés se séparent de l'eau par flottation dans le bassin 23 et peuvent être éliminées par la ligne 26, l'eau pouvant être recyclée au bassin tampon 5' par la ligne 27.

Le même résultat pourrait être obtenu, en variante, en conduisant l'eau sortant de la pompe 24, par la ligne 28, à la ligne 1'. Les hydrocarbures contenus dans les eaux résiduaires de la ligne 1' permettent de séparer les impuretés par flottation dans le bassin 2'. Cette variante permet la suppression du bassin 23.

2) Si l'on n'effectue pas une addition d'hydrocarbures par la ligne 25, les impuretés se séparent de l'eau par décantation dans le fond du bassin 23.

La première solution, sous ses deux formes, est préférable, car les impuretés flottées sont plus faciles à récupérer.

Les avantages du procédé selon l'invention apparaîtront mieux à la lecture de l'exemple qui suit, et qui n'a aucun caractère limitatif.

Exemple

On a effectué trois essais T1, T2 et A de traitement des eaux résiduaires provenant d'une raffinerie de pérole.

L'essai témoin T1 a été effectué dans une installation connue, telle que celle représentée sur la figure 1.

L'essai témoin T2 et l'essai A ont été effectués dans une installation telle que celle représentée sur la figure 2.

Dans les trois essais, les filtres 9a, 9b, 9c, 9'a, 9'b et 9'c sont identiques et contiennent du sable ayant une granulométrie comprise entre 1 et 3 mm. Chaque filtre contient 20 tonnes de sable et a une section de 10 m².

Les lits bactériens 11 et 11' contiennent chacun un remplissage d'anneaux de polypropylène ayant une surface spécifique de 190 m²/m³.

Le débit moyen des eaux entrant dans les installations est de 460 m³/heure.

On a traité dans les essais T1, T2 et A une charge identique, dont les caractéristiques, mesurées à la sortie des bacs 5 ou 5', sont les suivantes:

— concentration en hydrocarbures (mesurée selon norme AFNOR T 90203)     100 p.p.m. en poids environ,

— concentration en M.E.S. (mesurée selon norme AFNOR T 90105)     50 p.p.m. en poids environ.

Dans le cas de l'essai T1, il n'y a pas eu injection de polyélectrolyte dans la charge à traiter.

Dans le cas de l'essai T2, on a injecté dans la ligne 6', par la ligne 20, une solution aqueuse d'un polyélectrolyte cationique constitué par un chlorure d'amine polyquaternaire en quantité telle que la concentration du polyélectrolyte dans la charge des filtres à sable soit de 0,15 p.p.m., concentration exprimée en produit sec.

Dans le cas de l'essai A, on a injecté dans la ligne 6', par la ligne 20, une solution aqueuse d'un polyélectrolyte anionique commercialisé par la Société NALCO sous l'appellation NALCO D 4047, et constitué par un copolymère de l'acide acrylique et de l'acrylamide, en quantité telle que la concentration du polyélectrolyte dans la charge des filtres à sable soit de 0,2 p.p.m., concentration exprimée en produit sec.

On a effectué l'analyse de l'effluent des filtres à sable et on a obtenu les résultats figurant dans le tableau ci-après.

| | Sortie des filtres 9a, 9b, 9c ESSAI T1 | Sortie des filtres 9'a, 9'b, 9'c ESSAI T2 | Sortie des filtres 9'a, 9'b, 9'c ESSAI A |
|---|---|---|---|
| concentration en hydrocarbures | >50 p.p.m. | >50 p.p.m. | <10 p.p.m. |
| soit un taux d'élimination des hydrocarbures | <50% | <50% | >90% |
| concentration en m.e.s. | >20 p.p.m. | 20 p.p.m. | <5 p.p.m. |
| soit un taux d'élimination des m.e.s. | <50% | <50% | >90% |

Le tableau permet de constater que l'efficacité des filtres à sable est grandement améliorée par l'addition d'un polyélectrolyte anionique. L'efficacité des filtres est nettement plus faible, quand il n'y a pas d'injection de polyélectrolyte ou quand il y a injection d'un polyélectrolyte cationique.

Les Demanderesses ont par ailleurs constaté que des taux d'élimination semblables peuvent être obtenus avec le polyélectrolyte anionique pour des charges d'eau ayant des concentrations plus élevées d'hydrocarbures et de matières en suspension.

On a constaté également que, dans le cas des essais T1 et T2 la perte de charge dans un filtre 9a, 9b ou 9c reste constante, alors que, dans le cas de l'essai A, la perte de charge dans un filtre 9'a, 9'b ou 9'c augmente régulièrement, ce qui prouve une meilleure efficacité du filtre, lorsqu'il y a addition d'un polyélectrolyte anionique en amont des filtres à sable.

L'essai T1 a été poursuivi pendant 6 mois et, au bout de 6 mois, on a constaté un accroissement brusque de la DCO dans l'effluent de la ligne 12, qui est passée de 110 mg d'oxygène/1 à 250 mg d'oxygène/1 (DCO mesurée selon norme AFNOR T 90101). Cet accroissement peut être expliqué par l'empoisonnement du lit bactérien par l'excès d'hydrocarbures sortant des filtres à sable.

Dans le cas de l'essai A, la DCO de l'effluent de la ligne 12' est de 110 mg d'oxygène/1. Etant donné la faible concentration en hydrocarbures passant sur le lit bactérien, une saturation de celui-ci serait beaucoup plus difficile.

Dans le cas de l'essai A, le contre-lavage entraîne pratiquement toutes les impuretés (hydrocarbures—matières en suspension) fixées par le filtre. En effet, la perte de charge initiale du filtre est retrouvée à l'issue du contre-lavage.

Cet exemple montre donc bien les avantages du procédé selon l'invention.

**Revendications**

1. Procédé d'épuration d'eaux résiduaires et/ou industrielles contenant des hydrocarbures, comprenant la filtration desdites eaux dans au moins un filtre composé d'un matériau granulaire, ledit procédé comprenant alternativement une phase de filtration et une phase de contre-lavage de chacun des filtres par de l'eau, cette deuxième phase étant destinée à éliminer du filtre les impuretés retenues par celui-ci lors de la phase de filtration, ledit procédé étant caractérisé en ce que, lors de la phase de filtration, la charge d'eaux à épurer est, préalablement à son passage sur le filtre, additionnée d'un polyélectrolyte anionique.

2. Procédé selon la revendication 1, caractérisé en ce que le matériau granulaire est du sable.

3. Procédé selon l'une des revendications 1 et 2, caractérisé en ce que le polyélectrolyte anionique est choisi dans le groupe constitué par les produits du type sulfonique, ou les dérivés de l'acrylamide obtenus en particulier par copolymérisation ou par hydrolyse d'un polymère non ionique.

4. Procédé selon l'une des revendications 1 à 3, caractérisé en ce que le polyélectrolyte est un copolymère latex de l'acide acrylique et de l'acrylamide.

5. Procédé selon la revendication 4, caractérisé en ce que le polyélectrolyte est additionné aux eaux à épurer à une concentration, exprimée en produit sec, comprise entre 0,05 et 5 p.p.m.

6. Procédé selon l'une des revendications 1 à 5, caractérisé en ce que l'eau issue du contre-lavage est soumise à une décantation.

7. Procédé selon l'une des revendications 1 à 6, caractérisé en ce que l'eau issue du contre-lavage est soumise à un choc mécanique.

8. Procédé selon la revendication 7, caractérisé en ce que l'eau issue du contre-lavage est reprise par une pompe centrifuge.

9. Procédé selon l'une des revendications 1 à 8, caractérisé en ce que l'eau issue du contre-lavage est additionnée d'hydrocarbures.

10. Procédé selon l'une des revendications 1 à 9, caractérisé en ce que la filtration sur matériau granulaire est suivie d'un traitement biologique.

11. Procédé selon la revendication 10, caractérisé en ce que le traitement biologique consiste en un passage sur un lit bactérien.

**Patentansprüche**

1. Verfahren zur Reinigung von kohlen-wasserstoffhaltigen Abwässern und/oder Industriewässern durch deren Filterung in mindestens einem aus einem körnigen Material bestehenden Filter, wobei jeder Filter abwechselnd filtert und zur Entfernung der bei der Filterungsphase zurückgehaltenen Verunreinigungen vom Filter mit Wasser gegengewaschen wird, dadurch gekennzeichnet, daß während der Filterungsphase der zu reinigenden Wassercharge vor dem Durchlauf durch den Filter (9'a; 9'b; 9'c) ein anionischer Polyelektrolyt zugesetzt wird.

2. Verfahren nach Anspruch 1, dadurch gekennzeichnet, daß es sich beim körnigen Material um Sand handelt.

3. Verfahren nach Anspruch 1 oder 2, dadurch gekennzeichnet, daß der anionische Polyelektrolyt aus der Gruppe der Sulfonprodukte oder der Acrylamidderivate ausgewählt wird, insbesondere solchen, welche durch Copolymerisation oder Hydrolyse eines nichtionischen Polymerisats erhalten wurden.

4. Verfahren nach einem der Ansprüche 1 bis 3, dadurch gekennzeichnet, daß es sich beim Polyelektrolyt um ein Latexcopolymerisat von Acrylsäure und Acrylamid handelt.

5. Verfahren nach Anspruch 4, dadurch gekennzeichnet, daß der Polyelektrolyt der zu reinigenden Wassercharge in einer Konzentration zwischen 0,05 und 5 ppm, bezogen auf das trockene Produkt, zugesetzt wird.

6. Verfahren nach einem der Ansprüche 1 bis 5, dadurch gekennzeichnet, daß das Gegenwaschabwasser einem Dekantieren unterworfen wird.

7. Verfahren nach einem der Ansprüche 1 bis 6, dadurch gekennzeichnet, daß das Gegenwaschabwasser einem mechanischen Schock unterworfen wird.

8. Verfahren nach Anspruch 7, dadurch gekennzeichnet, daß das Gegenwaschabwasser mittels einer Zentrifugalpumpe (24) abgezogen wird.

9. Verfahren nach einem der Ansprüche 1 bis 8, dadurch gekennzeichnet, daß dem Gegenwaschabwasser Kohlenwasserstoffe zugesetzt werden.

10. Verfahren nach einem der Ansprüche 1 bis 9, dadurch gekennzeichnet, daß sich an die Filterung mit körnigem Material eine biologische Behandlung anschließt.

11. Verfahren nach Anspruch 10, dadurch gekennzeichnet, daß die biologische Behandlung im Durchführen durch ein Bakterienbett (11') besteht.

**Claims**

1. A process for purifying waste and/or industrial waters containing hydrocarbons, comprising the filtration of said waters in at least one filter formed from a granular material, said process comprising alternately a filtration phase and a counter washing phase of each of the filters with water, this second phase being intended to remove from the filter the impurities stopped by this latter during the filtration phase, said process being characterized in that, during the filtration phase, an anionic polyelectrolyte is added to the charge of waters to be purified before it passes over the filter.

2. The process according to claim 1, characterized in that the granular material is sand.

3. The process according to one of claims 1 and 2, characterized in that the anionic polyelectrolyte is chosen from the group formed by the products of the sulfonic type, or the derivatives of acrylamide obtained in particular by copolymerization or by hydrolysis of a non ionic polymer.

4. The process according to one of claims 1 to 3, characterized in that the polyelectrolyte is a latex copolymer of acrylic acid and acrylamide.

5. The process according to claim 4, characterized in that the polyelectrolyte is added to the waters to be purified in a concentration, expressed as dry product, between 0.05 and 5 p.p.m.

6. The process according to one of claims 1 to 5, characterized in that the water from counter washing is subjected to decantation.

7. The process according to one of claims 1 to 6, characterized in that the water from counter washing is subjected to a mechanical shock.

8. The process according to claim 7, characterized in that the water from counter washing is taken up again by a centrifugal pump.

9. The process according to one of claims 1 to 8, characterized in that the water from counter washing has hydrocarbons added thereto.

10. The process according to one of claims 1 to 9, characterized in that the filtration on granular material is followed by biological treatment.

11. The process according to claim 10, characterized in that the biological treatment consists in flowing over a bacterial bed.

Fig.1

Fig.2